# EUROPÄISCHE PATENTSCHRIFT

(11) **EP 1 046 544 B1**
(45) Veröffentlichungstag und Bekanntmachung des Hinweises auf die Patenterteilung: **09.01.2008**
(21) Anmeldenummer: 00890099.5
(22) Anmeldetag: 27.03.2000
(51) Int. Cl.: B60R 15/00, B60P 3/22, B64F 5/00

(54) **Fahrzeug für die Versorgung von Flugzeugen mit Toilettenspülwasser**
Vehicle for the supply of lavatory flush water for aircraft
Véhicule pour l'approvisionnement en eau de toilettes d'avions

(30) Priorität: 22.04.1999 AT 26999
(43) Veröffentlichungstag der Anmeldung: 25.10.2000
(73) Patentinhaber: Zellinger Gesellschaft m.b.H., A-4050 Traun (AT)
(72) Erfinder: Kock, Josef, Ing., 4050 Traun (AT)
(74) Vertreter: Hübscher, Helmut

(56) Entgegenhaltungen:
- EP-A- 0 637 542
- DE-A- 3 334 059
- DE-U- 9 111 803
- US-A- 3 570 503
- US-A- 4 424 828

## Beschreibung

Die Erfindung betrifft ein Fahrzeug für die Versorgung von Flugzeugen mit Toilettenspülwasser, bei dem wenigstens ein Frischwassertank über eine Pumpe mit einer an den Versorgungsanschluß des Flugzeuges ankuppelbaren Leitung verbindbar ist, in die über eine Dosiereinrichtung, z. B. ein Dosierventil, eine Dosierpumpe oder einen Injektor eine weitere Leitung für die Zugabe eines Desodorierungs- oder Desinfektionsmittelkonzentrates aus einem ebenfalls am Fahrzeug vorgesehenen Vorratsbehälter mündet.

In den meisten Fällen sind derartige Fahrzeuge für die vollständige Ver- und Entsorgung der Flugzeugtoiletten ausgebildet und dementsprechend zusätzlich zum Frischwassertank mit Fäkalientanks versehen, die über eigene Leitungen mit den entsprechenden Anschlüssen am Flugzeug kuppelbar sind. Vorzugsweise wird für die Handhabung der Fäkalienleitungen und auch der Frischwasserleitungen am Fahrzeug eine Hebebühne oder eine Hubgondel vorgesehen, von der aus auch andere Wartungsarbeiten am Flugzeug durchgeführt werden können.

Es ist bisher üblich, am Fahrzeug einen gesonderten Tank für das Desodorierungs- bzw. Desinfektionsmittel vorzusehen, wie beschrieben in Dokument US 4424828. Dieser Tank muß also in bestimmten Abständen mit dem jeweiligen Mittel gefüllt werden. Da es sich bei den hier verwendeten Desodorierungs- bzw. Desinfektionsmitteln um Konzentrate handelt, die in der unverdünnten Form aggressive, zum Teil giftige oder ätzende Eigenschaften haben und auch an der freien Luft zur Verdampfung neigen, erfordert das erwähnte Nachfüllen des Tanks besondere Sorgfalt und die Einhaltung verschiedener Sicherheitsvorkehrungen, z. B. die Verwendung geeigneter Schutzkleidungen oder sogar Schutzmasken für das hier betroffene Personal. Kommt es trotzdem zu einem unerwünschten Austritt, so sind auch für die Entsorgung verschütteter Konzentrate besondere Sicherheitsmaßnahmen einzuhalten. Eine besonders unangenehme Eigenschaft der meisten Desodorierungs- und Desinfektionsmittel in der konzentrierten Form besteht darin, daß sie bei Luftzutritt zur Bildung von Ablagerungen neigen, so daß bei mehrmaliger Nachbefüllung des ortsfest am Fahrzeug angebrachten Tanks solche Ablagerungen zur Verstopfung der Leitungen und zu Störungen der Dosiereinrichtungen führen können und zumindest periodisch eine vollständige Reinigung dieser Teile und des Tanks vorzunehmen ist, wobei wieder die Sicherheitsvorkehrungen eingehalten werden sollen. All dies führt zu einem beträchtlichen Zeitaufwand für die Nachbetankung und zu einem zusätzlichen Zeitaufwand, wenn Konzentrat verschüttet wurde.

Das Desodorierungs- bzw. Desinfektionsmittel wird bisher nur bei kleinen Flughäfen in Sicherheitsfässem angeliefert, die besondere Sicherheitsventile und Absperrungen zum Abzapfen aufweisen. Bevorzugt werden Konstruktionen, bei denen von der Faßdecke ein bis zum Faßboden reichendes Tauchrohr ausgeht, in dem durch Federn belastete Ventile untergebracht sind, die nach Abnehmen eines Verschlußdeckels durch Einführen einer Rohrsonde, die ihrerseits wieder mit einem Schlauch verbindbar ist, geöffnet werden können, so daß dann eine Entnahme über eine mit der Sonde verbundene Leitung erfolgen kann. Zusätzlich können die Ventile mit Gasanschlüssen für eine zur Austrittsstelle am Fahrzeugtank führende Pendelleitung versehen sein, um bei der Tankbefüllung entstehende Gase zurückzuleiten.

Bei Großflughäfen mit entsprechend höherem Verbrauch an Desodorierungs- und Desinfektionsmitteln werden Reservetanks vorgesehen, die zunächst von Tankfahrzeugen aus befüllt werden und an denen eine Nachbetankung der eingangs erwähnten Versorgungsfahrzeuge erfolgt. Hier können sich auch im Großtank Rückstände bilden, die zu Störungen beim Abfüllen führen bzw. in die Fahrzeugtanks weitergeleitet werden können, wobei überdies wegen der Aggressivität der jeweiligen Mittel zusätzliche Sicherheitsvorkehrungen notwendig werden.

Aufgabe der Erfindung ist es, bei einem Fahrzeug der eingangs genannten Art die Beschickung des Fahrzeuges mit dem Desodorierungs- bzw. Desinfektionsmittel zu vereinfachen, dabei eine erhöhte Sicherheit zu gewährleisten und die Nachversorgung des Fahrzeuges mit dem Konzentrat wesentlich zu beschleunigen.

Die gestellte Aufgabe wird erfindungsgemäß dadurch gelöst, daß der Vorratsbehälter aus einem mit einer Anschlußvorrichtung versehenen Wechselbehälter, insbesondere einem Originalfaß für das Desodorierungs- bzw. Desinfektionsmittelkonzentrat besteht, für das am Fahrzeug ein gesondertes Aufnahmeabteil vorgesehen ist, in dem die mit der Anschlußvorrichtung kuppelbare, zur Dosiereinrichtung führende Leitung mündet.

Zum Auswechseln kann der Wechselbehälter beispielsweise mit Hilfe eines einfachen Hubstaplers an das Versorgungsfahrzeug herangebracht und in das vorgesehene Aufnahmeabteil eingeschoben werden. Es ist aber auch möglich, am Fahrzeug eine eigene Hebevorrichtung zur Aufnahme bzw. Abgabe des Wechselbehälters anzubringen, z. B. eine Hebevorrichtung nach Art einer Ladebordwand vorzusehen. Der Wechselbehälter ist im Aufnahmeabteil geschützt untergebracht. Dabei kann das Abteil über eine eigene Tür verschließbar und auch mit einer Schutzauskleidung versehen sein. Die im nachhinein äußerst einfach erscheinende erfindungsgemäße Konstruktion löst trotzdem die bisher noch nicht gestellte, eingangs definierte Aufgabe. Auch für Großflughäfen ist es sinnvoll, möglichst gleich im Herstellerbetrieb abgefüllte Wechselbehälter, insbesondere Fässer zu verwenden, die z. B. auf Paletten angeliefert und einfach zwischengelagert werden können, wobei vorteilhaft diese Fässer für die Neubefüllung an den Herstellerbetrieb zurückgehen, wo sie gereinigt und unter den dort ohnehin notwendigen Sicherheitsvorkehrungen neu befüllt werden können. Da die Versorgungskette nicht unterbrochen wird, ergibt sich auch eine wesentliche Verringerung der Ablagerungsbildung in den Anschlußleitungen und Dosiervorrichtungen des Fahrzeuges.

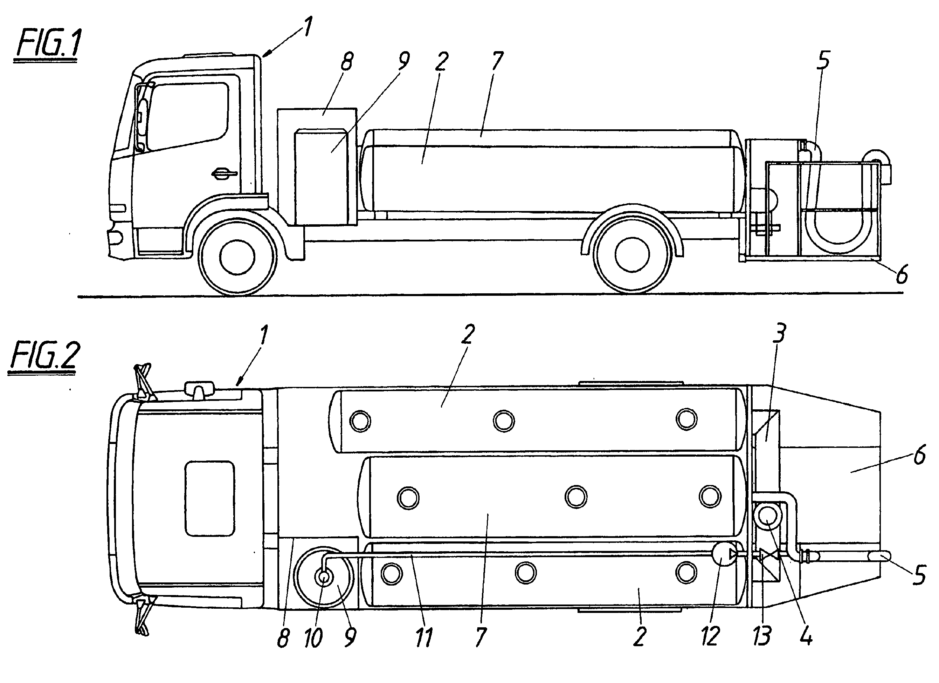

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1 und 2: ein erfindungsgemäßes Fahrzeug in schematisiert vereinfachter Darstellungsweise in Seitenansicht und in Draufsicht.

Das dargestellte Fahrzeug 1 dient nicht nur für die Versorgung von Flugzeugen mit Toilettenspülwasser, sondern auch für die vollständige Ent- und Versorgung der Flugzeugtoiletten. Dementsprechend sind am Fahrzeug zwei Fäkalientanks 2 untergebracht, die über eine gemeinsame Leitung 3 mit einem Anschluß 4 für eine z. B. als Teleskopleitung oder als einen entsprechend großen Durchmesser aufweisender Schlauch ausgebildete, mit dem Fäkalientank des Flugzeuges kuppelbare Leitung verbunden sind. Sowohl diese Leitung als auch eine als Schlauch ausgebildete Frischwasserleitung 5 können von einer hier am Heck des Fahrzeuges angebrachten Hebebühne 6 aus gehandhabt werden.

Die Frischwasserleitung 5 ist mit einem Frischwassertank 7 verbunden. Vor dem einen Fäkalientank 2 ist am Fahrzeugaufbau ein durch Außenwände abgeschlossenes Aufnahmeabteil 8 vorgesehen, das für die Aufnahme eines Wechselbehälters, beim Ausführungsbeispiel eines Originalfasses 9 für ein Desodorierungs- bzw. Desinfektionsmittel bestimmt ist. Dieses Originalfaß 9 ist in dort üblicher Weise mit einem Anschlußventil ausgestattet, das über eine Kupplung 10 mit einer im Aufnahmeabteil 8 mündenden Leitung 11 verbindbar ist, die das Konzentrat über eine Pumpe 12 und ein hier die Dosiereinrichtung bildendes Dosierventil 13 in die Leitung 5 abgeben kann. Üblicherweise wird das Konzentrat für den Spülvorgang in einer Menge von 0,5 bis 5 % dem über die Leitung 5 zugeführten Frischwasser zugesetzt. Selbstverständlich sind für das Originalaß 9 im Aufnahmeabteil entsprechende Halterungen vorgesehen.

## Patentansprüche

1. Fahrzeug (1) für die Versorgung von Flugzeugen mit Toilettenspülwasser, bei dem wenigstens ein Frischwassertank (7) über eine Pumpe mit einer an den Versorgungsanschluß des Flugzeuges ankuppelbaren Leitung (5) verbindbar ist, in die über ein Dosiereinrichtung (13) eine weitere Leitung (11) für die Zugabe eines Desodorierungs- oder Desinfektionsmittelkonzentrates aus einem ebenfalls am Fahrzeug vorgesehenen Vorratsbehälter (9) mündet, **dadurch gekennzeichnet, daß** der Vorratsbehälter aus einem mit einer Anschlußvorrichtung versehenen Wechselbehälter, insbesondere einem Originalfaß (9) für das Desodorierungs- bzw. Desinfektionsmittelkonzentrat besteht, für das am Fahrzeug (1) ein gesondertes Aufnahmeabteil (8) vorgesehen ist, in dem die mit der Anschl ußvorrichtung (10) kuppelbare, zur Dosiereinrichtung (13) führende Leitung (11) mündet.

## Claims

1. Vehicle (1) for supplying aircraft with water for toilet flushing, in which at least one fresh water tank (7) can be connected via a pump to a line (5) which can be coupled to the supply connection of the aircraft, into which line (5) a further line (11) connects via a dosing device (13), said further line (11) serving for the addition of a deodorant or disinfectant concentrate from a supply container (9) also provided on the vehicle, **characterised in that** the supply container consists of an exchangeable container, provided with a connecting device, in particular an original tank (9) for the deodorising or disinfecting agent concentrate, for which a separate compartment (6) is provided on the vehicle (1), into which the line (11) which can be coupled to the connecting device (10) and leads to the dosing device (13) runs.

## Revendications

1. Véhicule (1) pour l'alimentation en eau de toilettes d'avions, pour lequel au moins un réservoir à eau neuve (7) est susceptible d'être relié à une conduite (5) pouvant être couplée au raccordement d'alimentation de l'avion, conduite dans laquelle débouche, par un dispositif de dosage (13), une autre conduite (11) pour l'addition d'un concentré de produit déodorant ou désinfectant issu d'un réservoir de stockage (9) également prévu sur le véhicule, **caractérisé en ce que** le réservoir de stockage est constitué d'un réservoir amovible muni d'un dispositif de raccordement, en particulier d'un récipient original (9) pour le concentré de produit déodorant ou désinfectant, pour lequel, sur le véhicule (1), est prévu un compartiment de logement (8) séparé, dans lequel débouche la conduite (11), menant au dispositif de dosage (13) et susceptible d'être accouplée au dispositif de raccordement (10).
